# EUROPÄISCHE PATENTANMELDUNG

(11) **EP 0 621 306 A1**
(43) Veröffentlichungstag der Anmeldung: **26.10.1994**
(21) Anmeldenummer: 94104845.6
(22) Anmeldetag: 28.03.1994
(51) Int. Cl.: C08K 5/00

(54) **Verfahren zum verzugsfreien Pigmentieren von hochpolymeren organischen Materialien**

(30) Priorität: 22.04.1993 DE 4313090
(71) Anmelder: BASF Aktiengesellschaft, D-67063 Ludwigshafen (DE)
(72) Erfinder: Schroeder, Joerg, Dr., D-69469 Weinheim (DE)

(57) **Zusammenfassung**

Verzugsfreies Pigmentieren von hochpolymeren organischen Materialien, indem man hierfür organische Pigmente verwendet, die einem Niedertemperatur-Plasma ausgesetzt worden sind.

## Beschreibung

Die vorliegende Erfindung betrifft ein neues Verfahren zum verzugsfreien Pigmentieren von hochpolymeren organischen Materialien.

Beim Einfärben von hochpolymeren organischen Materialien, insbesondere von Polyolefinen, mit organischen Pigmenten sind häufig sogenannte Verzugserscheinungen zu beobachten. Diese äußern sich durch veränderte mechanische Eigenschaften des eingefärbten Materials. Handelt es sich beispielsweise um großvolumige Spritzgußteile, wie Flaschenkästen aus Polyethylen hoher Dichte (HDPE), so sind mit der Zeit oft Verformungen und Schrumpfungen, begleitet von Rißbildung, zu beobachten. Dies kann z.B. bei Flaschenkästen auch dazu führen, daß diese nicht mehr stapelbar sind, und den jeweiligen Artikel in der Regel unbrauchbar machen. Neben diesen Langzeitdefekten tritt oft auch nach nur kurzem Gebrauch eine Versprödung des Materials auf, bei Flaschenkästen z.B. mangelhafte Ausrißfestigkeit im Tragegriffbereich.

Diese Erscheinungen sind auf die Anwesenheit des organischen Pigments zurückzuführen, das bei der Erstarrung der Polymerschmelze als Nukleierungszentrum, d.h. keimbildend, wirkt, die Kristallisation des reinen Polymers stört und zur Entstehung einer zum Verzug neigenden Sphärulitenstruktur des Polymers führt.

Um diesem Effekt entgegenzuwirken, wurden bereits verschiedene Methoden vorgeschlagen, bei denen u.a. die Oberfläche des Pigments z.B. mit Polymeren belegt wird oder Mischungen des Pigments mit einem geeigneten Pigmentderivat oder einem anderen Zusatzstoff eingesetzt werden. Diese Methoden sind jedoch oft nur für bestimmte Pigmentklassen anzuwenden und ergeben auch nicht immer zufriedenstellende Resultate.

Der Erfindung lag daher die Aufgabe zugrunde, ein möglichst breit anwendbares Verfahren bereitzustellen, das verzugsfreies Pigmentieren von polymerem Material mit organischen Pigmenten möglich macht.

Demgemäß wurde ein Verfahren zum verzugsfreien Pigmentieren von hochpolymeren organischen Materialien gefunden, welches dadurch gekennzeichnet ist, daß man hierfür organische Pigmente verwendet, die einem Niedertemperatur-Plasma ausgesetzt worden sind.

Durch die Plasmabehandlung wird die Oberfläche der organischen Pigmente so verändert, daß sie nicht mehr störend auf die Kristallisation des Polymers wirken und Verzugserscheinungen am fertigen eingefärbten Produkt vermieden werden können.

Diese Oberflächenbehandlung des Pigments mit einem Niedertemperatur-Plasma kann in an sich bekannter Weise und wie z.B. in der DE-A-33 21 044 und der EP-B-254 424 beschrieben vorgenommen werden.

Da bei Verwendung eines Niedertemperatur-Plasmas bei Umgebungstemperaturen von im allgemeinen 20 bis 70°C, vorzugsweise von 20 bis 50°C gearbeitet wird, können in der Regel auch die weniger temperaturstabilen organischen Pigmente ohne thermische Zersetzung dieser Behandlung ausgesetzt werden.

Ein Niedertemperatur-Plasma kann durch Radiofrequenz, Mikrowellen, Gleichstrom oder Wechselstrom erzeugt werden.

Beim erfindungsgemäßen Pigmentierverfahren werden bevorzugt solche organischen Pigmente eingesetzt, die mit einem durch Radiofrequenzstrahlung (üblicherweise 13,56 MHz) oder insbesondere durch Mikrowellenstrahlung (üblicherweise 2,45 GHz) erzeugten Niedertemperatur-Plasma behandelt worden sind.

Bei Verwendung einer 13,56 MHz-Energiequelle enthält das entstehende Plasma einen hohen Anteil an ionisierten Gasteilchen mit breiter Energieverteilung auf hohem Niveau, während bei Verwendung einer 2,45 GHz-Energiequelle mit afterglow-Einrichtung nur ein geringer Anteil an ionisierten Teilchen die Probe erreicht und bevorzugt nichtionische, z.T. radikalische Anregungszustände der Gasteilchen mit engerer Energieverteilung auf niedrigerem Energieniveau an der Pigmentprobe vorherrschen.

Ein besonderer Vorteil liegt in der Verwendung von sogenannten Mikrowave-Plasma-Down-Stream-Afterglow-Anlagen, bei denen das Plasma räumlich getrennt vom zu behandelnden Pigmentpulver erzeugt wird. Diese Vorgehensweise ist für das Pigment besonders schonend, da eine Schädigung des Pigments durch UV-Licht und elektromagnetische Strahlung allgemein und damit auch eine erhöhte thermische Belastung vermieden wird.

Zur Erzeugung des Plasmas eignen sich im erfindungsgemäßen Fall die bekanntermaßen für diesen Zweck eingesetzten, reaktionsfähigen (Reaktiv-) und nicht reaktionsfähigen (Anregungs-)Gase; beispielsweise seien genannt: Luft, Sauerstoff, Wasserstoff, Wasserdampf, Ammoniak, Schwefeldioxid, Kohlendioxid, Kohlenstofftetrafluorid, Stickstoff (kann sowohl als Anregungsals auch als Reaktivgas wirken), Helium und Argon. Die Gase können allein oder in Form von Gemischen verwendet werden. Die Anregungsgase werden bevorzugt als Mischungen mit Reaktivgasen eingesetzt. Im allgemeinen beträgt das Volumenverhältnis Anregungsgas zu Reaktivgas 20:1 bis 1:1, bevorzugt 10:1 bis 3:1.

Üblicherweise arbeitet man bei einem bevorzugten Gasdruck von etwa 0,1 bis 10 mbar, möglich ist jedoch auch ein Arbeitsdruck von 0,01 bis 50 mbar. Die Durchflußgeschwindigkeit beträgt in der Regel 0,5 bis 250 Nml/min (Nml = ml unter Normalbedingungen). Hierbei ist die Probengröße zu beachten; je größer die Probe ist, umso höher ist der Gasbedarf.

Vorzugsweise werden die Pigmentteilchen während der Einwirkung in Bewegung gehalten, um eine gleichmäßige Behandlung zu gewährleisten.

Die Behandlungsdauer hängt schließlich von der Art und Menge des Pigments, der Art, dem Druck und der Flußrate des Plasma-Gases sowie der Plasma-Leistung ab. Als günstig hat es sich dabei erwiesen, wenn in der Behandlungszeit ein Reaktivgasgesamtangebot von etwa 100 bis 1000 µmol/m² Pigmentoberfläche vorliegt, wobei ein Ausnutzungsgrad von 1 ‰ bis 1 % vorausgesetzt wird. Übliche Behandlungsdauern bei einer Pigmentprobe von 10 bis 30 g betragen in der Regel 2 bis 8, bevorzugt 4 bis 6 h.

Als organische Pigmente eignen sich für das erfindungsgemäße Verfahren alle für die Pigmentierung von hochpolymeren organischen Materialien üblicherweise eingesetzten organischen Pigmente. Beispielsweise seien folgende Pigmente aufgeführt:
- Monoazopigmente:
   C.I. Pigment Brown 25; C.I. Pigment Orange 5, 36, 67; C.I. Pigment Red 3, 48:4, 52:2, 251, 112, 170; C.I. Pigment Yellow 1, 3, 73, 74, 65, 97, 151, 154;
- Disazopigmente:
   C.I. Pigment Red 144, 166; C.I. Pigment Yellow 12, 17, 83, 113;
- Anthrachinonpigmente:
   C.I. Pigment Yellow 147; C.I. Pigment Red 177;
- Anthrapyrimidinpigmente:
   C.I. Pigment Yellow 108;
- Chinacridonpigmente:
   C.I. Pigment Red 122, 202, 207; C.I. Pigment Violet 19;
- Chinophthalonpigmente:
   C.I. Pigment Yellow 138;
- Diketopyrrolopyrrolpigmente:
   C.I. Pigment Red 254;
- Dioxazinpigmente:
   C.I. Pigment Violet 23, 37;
- Flavanthronpigmente:
   C.I. Pigment Yellow 24;
- Indanthronpigmente:
   C.I. Pigment Blue 60, 64;
- Isoindolinpigmente:
   C.I. Pigment Orange 69; C.I. Pigment Red 260; C.I. Pigment Yellow 139;
- Isoindolinonpigmente:
   C.I. Pigment Orange 61; C.I. Pigment Red 257; C.I. Pigment Yellow 109, 110, 173;
- Isoviolanthronpigmente:
   C.I. Pigment Violet 31;
- Perinonpigmente:
   C.I. Pigment Orange 43; C.I. Pigment Red 194;
- Perylenpigmente:
   C.I. Pigment Black 31; C.I. Pigment Red 123, 149, 178, 179, 190, 224; C.I. Pigment Violet 29;
- Phthalocyaninpigmente:
   C.I. Pigment Blue 15 und 16; C.I. Pigment Green 7 und 36;
- Pyranthronpigmente:
   C.I. Pigment Orange 51; C.I. Pigment Red 216;
- Thioindigopigmente:
   C.I. Pigment Red 88 und 181;
- Triphenylmethanpigmente:
   C.I. Pigment Blue 61, 62;
- Metallkomplexe:
   C.I. Pigment Red 48:2, 52:2.

Bevorzugt wird das erfindungsgemäße Verfahren zum Pigmentieren von Polyolefinen, besonders von Polypropylen und ganz besonders von Polyethylen und HDPE eingesetzt.

Das erfindungsgemäße Verfahren hat den großen Vorteil, daß praktisch alle organischen Pigmente, insbesondere auch solche, die üblicherweise zu Kristallisationsstörungen führen, problemlos zur Pigmentiereung von hochpolymeren organischen Materialien verwendet werden können und dabei verzugsfreie Artikel erhalten werden.

### Beispiele

Zur Beurteilung der mit der Verzugsneigung gekoppelten, heterogenen Keimbildungsneigung wurden die Kristallisationstemperaturen von sich abkühlenden, aufgeschmolzenen, pigmentierten und nichtpigmentierten HDPE-Proben durch Differential Scanning Calorimetry mit dem DSC-Gerät Thermal Analyzer 9900 der Firma DuPont bestimmt. Je höher die Kristallisationstemperatur T_{K} einer pigmentierten Probe über derjenigen einer nichtpigmentierten Probe liegt, umso größer ist die Keimbildungsaktivität und damit die Neigung zum Verzug.

Zur Herstellung der Prüfspritzlinge wurden jeweils 0,2 Gew.-% Pigment auf ein HDPE-Granulat (Lupolen ® 6031) aufgepudert. Diese Mischung wurde dann bei 200 bis 240°C über einen Zweischneckenextruder homogenisiert und zu einem farbigen Granulat verarbeitet, aus dem bei 260°C über eine Spritzgußmaschine Prüfspritzlinge im Scheckkartenformat (60 mm x 45 mm x 2 mm) hergestellt wurden.

Die Messung der Kristallisationstemperaturen erfolgte in Abkühlphase mit einer Kühlrate von 10°/min bei einer Probeneinwaage von 6,5 mg (Teile der Scheckkarten). Reines HDPE zeigt bei dieser Messung eine Kristallisationstemperatur T_{K} im Maximum der DSC-Kurve von 117,2 ± 0,5°C. Der Kristallisationsbeginn liegt bei 122°C.

### Beispiel 1

10 g C.I. Pigment Red 178 in Pulverform wurden mit einem Niedertemperatur-Plasma einer Plasma-Anlage MAL-1200-X der Firma Plasonic mit Down-Stream-Afterglow-Quelle DSA-1200 behandelt. Dabei wurde eine Mikrowellenfrequenz von 2,45 GHz zur Erzeugung eines Plasmas von 800 W unter einem Druck von 0,3 mbar in einem Sauerstoff/Argon-Strom (v/v 1:7) mit einer Durchflußgeschwindigkeit von 90 Nml/min verwendet. Die Behandlungsdauer betrug 6 h.

Eine mit dem so behandelten Pigment eingefärbte HDPE-Probe zeigte eine Kristallisationstemperatur T_{K} von 117,7 ± 0,2°C im Maximum und einen Kristallisationsbeginn von 122°C.

Die Kristallisationstemperatur T_{K} einer mit dem unbehandelten Pigment eingefärbten Vergleichsprobe lag bei 118,8 ± 0,2°C im Maximum, der Kristallisationsbeginn lag bei 123°C. Die Verzugsneigung ist in diesem Fall deutlich erhöht.

Außerdem Zeigte die Vergleichsprobe eine deutlich größere Anzahl kleiner Sphärulite im Gegensatz zu wenigen, größeren Sphäruliten bei der erfindungsgemäßen Probe.

### Beispiel 2

Analog Beispiel 1 wurde das Pigment unter Verwendung eines Ammoniak/Argon-Stroms (v/v 1:4) mit einer Durchflußgeschwindigkeit von 40 Nml/min behandelt.

Eine mit dem behandelten Pigment eingefärbte HDPE-Probe zeigte eine Kristallisationstemperatur T_{K} von 118,0 ± 0,2°C im Maximum und einen Kristallisationsbeginn von 122°C.

## Patentansprüche

1. Verfahren zum verzugsfreien Pigmentieren von hochpolymeren organischen Materialien, dadurch gekennzeichnet, daß man hierfür organische Pigmente verwendet, die einem Niedertemperatur-Plasma ausgesetzt worden sind.

2. Verfahren nach Anspruch 1, dadurch gekennzeichnet, daß man organische Pigmente verwendet, die einem durch Radiofrequenz- oder Mikrowellenstrahlung erzeugten Niedertemperatur-Plasma ausgesetzt worden sind.

3. Verfahren nach Anspruch 1 oder 2, dadurch gekennzeichnet, daß man es zum Pigmentieren von Polyolefinen einsetzt.
